# EUROPÄISCHE PATENTANMELDUNG

(11) **EP 4 592 143 A1**
(43) Veröffentlichungstag der Anmeldung: **30.07.2025**
(21) Anmeldenummer: 25152090.4
(22) Anmeldetag: 15.01.2025
(51) Int. Cl.: B60R 11/00

(54) **HALTEVORRICHTUNG FÜR EIN WARNDREIECK SOWIE KRAFTFAHRZEUG MIT EINER SOLCHEN**

(30) Priorität: 24.01.2024 DE 102024200612
(71) Anmelder: Volkswagen Aktiengesellschaft, 38436 Wolfsburg (DE)
(72) Erfinder: Stampe, Thomas, 38440 Wolfsburg (DE); Svoboda, Melina, 38440 Wolfsburg (DE)

(57) **Zusammenfassung**

Die Erfindung betrifft eine Haltevorrichtung (40) für ein Warndreieck (42) in einem Kofferraum (36) eines Kraftfahrzeugs (10). Die Haltevorrichtung (40) umfasst eine Heckklappe (26), ein mit der Heckklappe (26) verbundenes Halteelement (44) und eine Heckklappenverkleidung (46), welche einen Grundkörper (62) der Heckklappe (26) an der dem Kofferraum (36) zugewandten Seite der Heckklappe (26) verkleidet. Dabei ist in der Heckklappenverkleidung (46) eine Ausnehmung (48) ausgebildet, in welcher das Warndreieck (42) aufgenommen wird. Das Halteelement (44) liegt im Bereich der Ausnehmung (48) der Heckklappenverkleidung (46) derart an der Heckklappenverkleidung (46) an oder nimmt die Heckklappenverkleidung (46) derart auf, dass das Halteelement (46) eine Versteifung (50) für die Heckklappenverkleidung (46) ausbildet.

Die Erfindung betrifft ferner ein Kraftfahrzeug (10) mit einer solchen Haltevorrichtung (40), wobei die Haltevorrichtung (40) in einem Kofferraum (36) des Kraftfahrzeuges (10) angeordnet ist.

## Beschreibung

Die Erfindung betrifft eine Haltvorrichtung für ein Warndreieck in einem Kofferraum eines Kraftfahrzeuges sowie ein Kraftfahrzeug mit einer solchen Haltevorrichtung gemäß dem Oberbegriff der unabhängigen Patentansprüche.

Zur Absicherung von Unfallstellen und zur Erstversorgung von Verletzten am Unfallort ist es vorgeschrieben, in einem Kraftfahrzeug ein Warndreieck und einen Verbandskasten mitzuführen. Dabei wird insbesondere das Warndreieck in der Regel in einem Kofferraum des Kraftfahrzeugs mitgeführt. Dabei sollte die Position zur Aufbewahrung des Warndreiecks so angeordnet sein, dass ein Benutzer des Kraftfahrzeuges bei einem Unfall oder in einem Pannenfall das Warndreieck erreichen kann, ohne den kompletten Kofferraum entleeren zu müssen. Der Kofferraum ist dabei im Allgemeinen in einer Rückwand des Fahrzeuginnenraums und rückseitig durch eine Verkleidung einer Fahrzeugheckklappe begrenzt. Seitlich ist der Kofferraum von Innenverkleidungen als Seitenverkleidungen an der Karosserie des Kraftfahrzeuges begrenzt. Der Kofferraum weist in der Regel einen Ladeboden auf, unter welchem weitere Ablagefächer und/oder Bordwerkzeug sowie ein Ersatzreifen oder ein Reifenreparaturkit bevorratet werden können.

Um einen komfortablen Betrieb des Kraftfahrzeugs zu ermöglichen, ist es gewünscht, dass das Warndreieck und der Verbandskasten nicht einfach auf dem Kofferraumboden aufliegen, sondern mittels entsprechender Befestigungseinrichtungen fixiert sind, um ein Bewegen, insbesondere ein Rutschen, des Warndreiecks sowie des Verbandskastens innerhalb des Kofferraums zu vermeiden. Derartige Befestigungseinrichtungen sind jedoch aufwendig in der Herstellung und benötigen ferner zusätzlichen Bauraum innerhalb des Kofferraums.

Die DE 10 2015 008 134 A1 beschreibt ein Kraftfahrzeug mit einer Halterung für ein Warndreieck. Das Kraftfahrzeug umfasst eine Karosserie, wenigstens einen Antriebsmotor, insbesondere einen Verbrennungsmotor und/oder Elektromotor, einen Kofferraum und eine den Kofferraum mittelbar oder unmittelbar begrenzende Innenverkleidung, welche an der Karosserie mittelbar oder unmittelbar befestigt ist. Innerhalb des Kraftfahrzeugs ist wenigstens eine Funktionskomponente, insbesondere ein Warndreieck und/oder ein Verbandkasten befestigt, wobei die wenigstens eine Funktionskomponente zwischen der Karosserie und der Innenverkleidung in einer Halteposition befestigt ist.

Der Erfindung liegt nun die Aufgabe zugrunde, ein Warndreieck und/oder einen Verbandskasten derart in einem Kofferraum anzuordnen, dass sie im Bedarfsfall einfach zu entnehmen sind, jedoch auch bei einem Unfall nicht unkontrolliert durch den Kofferraum fliegen.

Die Aufgabe wird durch eine Haltevorrichtung für ein Warndreieck in einem Kofferraum eines Kraftfahrzeugs gelöst. Die Haltevorrichtung umfasst eine Heckklappe, ein mit der Heckklappe verbundenes Halteelement und eine Heckklappenverkleidung, welche einen Grundkörper der Heckklappe an der dem Kofferraum zugewandten Seite der Heckklappe verkleidet. Dabei ist in der Heckklappenverkleidung eine Ausnehmung ausgebildet, in welcher das Warndreieck aufgenommen wird. Das Halteelement liegt im Bereich der Ausnehmung der Heckklappenverkleidung derart an der Heckklappenverkleidung an oder nimmt die Heckklappenverkleidung derart auf, dass das Halteelement eine Versteifung für die Heckklappenverkleidung ausbildet. Die Haltevorrichtung ermöglicht eine besonders stabile Befestigung des Warndreiecks in einer Heckklappe eines Kraftfahrzeuges, wobei das Warndreieck auch bei einem Unfall nicht aus der Halterung herausfällt und somit stets einfach aufzufinden und zur Absicherung einer Panne oder einer Unfallstelle zu erreichen ist. Dabei kann auf weitere Fixierungsmittel für das Warndreieck und eine zusätzliche Klappe oder einen Spanngurt verzichtet werden, wodurch zum einen die Kosten für die Halterung gesenkt werden können und zum anderen die Erreichbarkeit des Warndreiecks erleichtert wird.

Durch die in den abhängigen Ansprüchen aufgeführten zusätzlichen Merkmale sind vorteilhafte Verbesserungen und Weiterentwicklungen der im unabhängigen Anspruch genannten Haltevorrichtung möglich.

In bevorzugter Ausgestaltung der Erfindung ist vorgesehen, dass das Halteelement einen mit der Heckklappe verbundenen ersten Abschnitt aufweist, welcher im Wesentlichen parallel zu einem Ladeboden des Kofferraums verläuft und einen sich an den ersten Abschnitt anschließenden zweiten Abschnitt aufweist, welcher im Wesentlichen senkrecht zu dem ersten Abschnitt des Halteelements verläuft. Dadurch kann eine besonders einfache und kostengünstige Version einer Haltevorrichtung ausgebildet werden. Insbesondere kann die Haltevorrichtung zur Fixierung und/oder zur Versteifung der Heckklappenverkleidung genutzt werden, wodurch zusätzliche Halteelemente oder Versteifungselemente entfallen können.

Dadurch ist eine besonders einfache und kostengünstige Montage der Heckklappenverkleidung möglich.

Gemäß einer bevorzugten Ausgestaltung der Haltevorrichtung ist vorgesehen, dass die Heckklappenverkleidung über das Halteelement mit der Heckklappe verbunden ist. Durch eine Verbindung der Heckklappenverkleidung mit dem Halteelement kann die Konstruktion der Heckklappenverkleidung vereinfacht werden, da auf zusätzliche Versteifungselemente oder Aufnahmeelemente zur Stabilisierung der Heckklappenverkleidung verzichtet werden kann. Dadurch ist eine besonders einfache und kostengünstige Herstellung der Haltevorrichtung möglich.

Besonders bevorzugt ist dabei, wenn die Heckklappenverkleidung formschlüssig mit dem Halteelement verbunden ist. Durch eine formschlüssige Verbindung der Heckklappenverkleidung mit dem Halteelement kann auf zusätzliche Fixierungselemente wie Schrauben, Klammern oder Nieten verzichtet werden. Dadurch ist eine besonders einfache Montage der Heckklappenverkleidung an dem Halteelement möglich. Ferner wird durch eine formschlüssige Verbindung auf einfache Art und Weise eine Versteifung für die Heckklappenverkleidung ausgebildet, wodurch die Stabilität der Aufnahme für das Warndreieck weiter erhöht werden kann.

In einer vorteilhaften Ausgestaltung der Haltevorrichtung ist vorgesehen, dass das Halteelement stoffschlüssig, insbesondere mittels einer Schweißverbindung oder einer Lötverbindung, mit der Heckklappe, insbesondere mit dem Grundkörper der Heckklappe, verbunden ist. Dabei kann das Halteelement bereits beim Rohbau der Heckklappe an dem Grundkörper fixiert werden, sodass auf nachträgliche Montageschritte verzichtet werden kann. Dadurch kann der Fertigungsprozess für die Heckklappe insgesamt vereinfacht und die Fertigungskosten reduziert werden.

In weiterer bevorzugter Ausgestaltung der Erfindung ist vorgesehen, dass das Halteelement über eine reversibel lösbare Verbindung mit der Heckklappe verbunden ist. Alternativ zu einer stoffschlüssigen Verbindung kann das Halteelement auch mit dem Grundkörper der Heckklappe über eine reversibel lösbare Verbindung, insbesondere über eine Schraubverbindung, verbunden werden. Eine solche Verbindung kann vorteilhaft sein, da durch die reversibel lösbare Verbindung in der Regel eine leichte Verschiebung des Halteelements möglich ist, um gegebenenfalls vorhandene Fertigungstoleranzen ausgleichen zu können.

In einer vorteilhaften Ausgestaltung der Haltevorrichtung ist vorgesehen, dass an der Ausnehmung zwischen einem der Heckklappe zugewandten Abschnitt der Heckklappenverkleidung und dem Grundkörper der Heckklappe ein Abstandshalter angeordnet ist. Dadurch kann auf einfache Art und Weise eine Ausnehmung in der Heckklappenverkleidung ausgebildet werden, welche tief genug ist, um ein Warndreieck aufnehmen zu können. Ferner kann durch den Abstandshalter ein Abstand zwischen dem Grundkörper der Heckklappe und der Heckklappenverkleidung erreicht werden, um zusätzliche Elemente der Heckklappe, wie eine Mechanik zum Öffnen und Schließen der Heckklappe und/oder Elektronikkomponente, insbesondere Komponenten der Kraftfahrzeugbeleuchtung, in der Heckklappe zu integrieren und den dafür notwendigen Bauraum zu schaffen.

Gemäß einer bevorzugten Ausführungsform der Haltevorrichtung ist vorgesehen, dass das Warndreieck kraftschlüssig und/oder formschlüssig in der Ausnehmung aufgenommen ist. Durch eine formschlüssige Aufnahme kann ein besonders gutes und sicheres Halteergebnis für das Warndreieck erreicht werden. Die Aufnahme kann dadurch weiter verbessert werden, dass das Warndreieck mit einer Presspassung in der Ausnahme aufgenommen ist, sodass sich zusätzlich zu der formschlüssigen Verbindung eine kraftschlüssige Verbindung ergibt, welche die Aufnahme des Warndreiecks weiter verbessert.

In einer vorteilhaften Ausgestaltung der Haltevorrichtung ist vorgesehen, dass die Ausnehmung eine Öffnung zur Entnahme des Warndreiecks aus der Halterung aufweist, welche oberhalb des Aufnahmebereichs liegt. Dadurch kann eine Entnahme des Warndreiecks aus der Halterung vereinfacht werden, wobei das Warndreieck lediglich aus der Öffnung hinaus gezogen werden muss, um eingesetzt werden zu können.

Besonders bevorzugt ist dabei, wenn die Unterkante der Öffnung oberhalb der Oberkante eines in der Ausnehmung aufgenommenen Warndreiecks liegt. Dadurch kann sichergestellt werden, dass das Warndreieck vollständig in der Ausnehmung der Heckklappenverkleidung aufgenommen ist und somit ein besonders sicheres Aufnahmeergebnis erreicht wird.

Ein weiterer Teilaspekt der Erfindung betrifft ein Kraftfahrzeug mit einer solchen Halteeinrichtung, wobei die Halteeinrichtung in einem Kofferraum des Kraftfahrzeugs angeordnet ist. Bei einem solchen Kraftfahrzeug kann das Warndreieck auf einfache und kostengünstige Art und Weise in einem Kofferraum fixiert werden. Dabei wird sowohl eine gute Erreichbarkeit des Warndreiecks bei einer Panne oder einem Unfall als auch eine besonders stabile Halterung sichergestellt.

Besonders bevorzugt ist dabei, wenn die Halteeinrichtung in einer Heckklappe des Kraftfahrzeugs ausgebildet ist, welche einen Kofferraum des Kraftfahrzeugs begrenzt. Auf diese Art und Weise kann das Warndreieck durch ein Öffnen der Heckklappe entnommen werden, ohne das der Kofferraum entladen werden muss. Dies ist insbesondere bei einem voll beladenen Fahrzeug vorteilhaft, da keine zusätzliche Zeit für das Entladen des Kofferraums vergeht, um an das Warndreieck gelangen zu können.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erfindungsgemäßes Kraftfahrzeug mit einem Kofferraum, in welchem ein Warndreieck in einer erfindungsgemäßen Halterung aufbewahrt ist;
- Figur 2: ein bevorzugtes Ausführungsbeispiel einer erfindungsgemäßen Halterung für ein Warndreieck in einem Kofferraum eines Kraftfahrzeugs;
- Figur 3: eine bevorzugte Ausgestaltung einer Kofferraumverkleidung eines solchen Haltevorrichtung; und
- Figur 4: eine weitere Darstellung einer solchen Kofferraumverkleidung sowie von Befestigungselementen zur Fixierung einer solchen Kofferraumverkleidung.

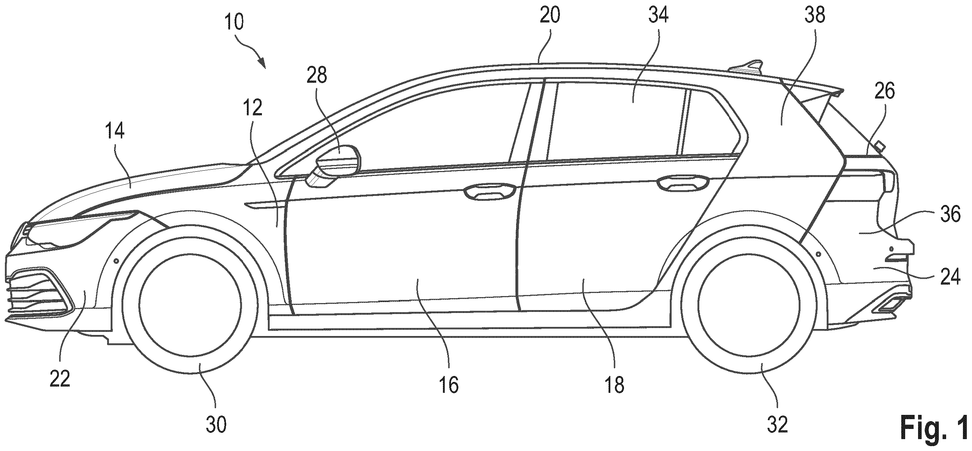

Figur 1 zeigt ein erfindungsgemäßes Kraftfahrzeug 10, bei welchem in einem Kofferraum 36 eine Haltevorrichtung 40 zur Aufnahme eines Warndreiecks 42 vorgesehen ist. Das Kraftfahrzeug 10 umfasst eine Karosserie 12, an welcher eine Motorhaube 14, vordere Türen 16, hintere Türen 18 sowie ein Dach 20 des Kraftfahrzeuges 10 befestigt sind. Das Kraftfahrzeug 10 umfasst ferner einen vorderen Stoßfänger 22 und einen hinteren Stoßfänger 24, welche ebenfalls an der Karosserie 12 befestigt sind. Darüber hinaus weist das Kraftfahrzeug 10 ein Heckklappe 26 auf, mit welchem ein Kofferraum 36 des Kraftfahrzeugs 10 geöffnet oder verschlossen werden kann.

Das Kraftfahrzeug 10 weist eine Vorderachse 30 und eine Hinterachse 32 auf, wobei der Kofferraum 36 vorzugsweise im Fahrzeugheck im Bereich der Hinterachse 32 ausgebildet ist. Dabei ist der Kofferraum 36 insbesondere durch eine Rückbank von einem Fahrzeuginnenraum 34 des Kraftfahrzeugs 10 getrennt, in welchem die Passagiere befördert werden. Das Kraftfahrzeug 10 weist zudem im Bereich des Fahrzeughecks eine C-Säule 38 auf, welche den Kofferraum 36 seitlich begrenzen kann. In Richtung des Fahrzeughecks ist der Kofferraum 36 durch die Heckklappe 26 begrenzt.

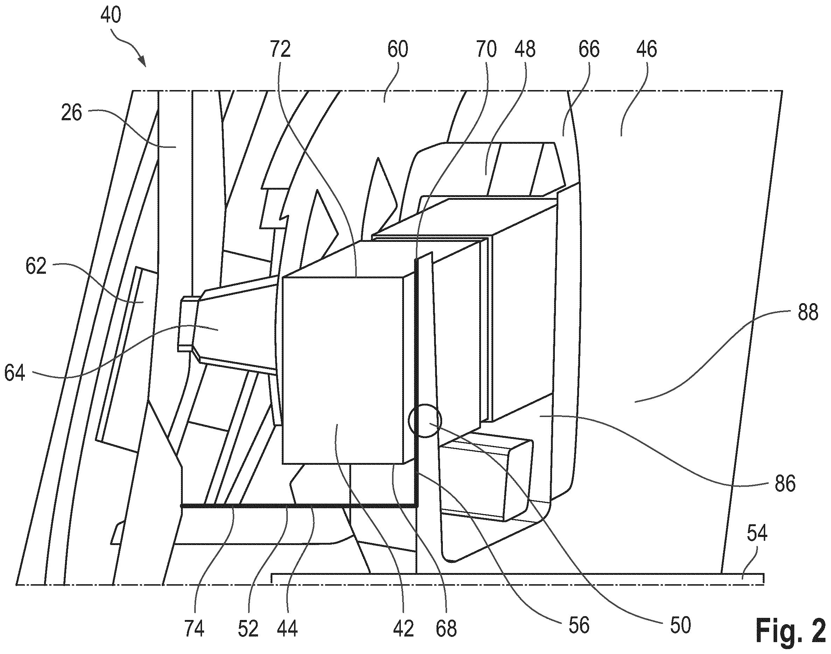

In Figur 2 ist ein bevorzugtes Ausführungsbeispiel für eine erfindungsgemäße Haltevorrichtung 40 für ein Warndreieck 42 in einem Kofferraum 36 eines Kraftfahrzeugs 10 dargestellt. Die Haltevorrichtung 40 umfasst eine Heckklappe 26 mit einem Grundkörper 62, ein mit dem Grundkörper 62 der Heckklappe 26 verbundenes Halteelement 44, insbesondere einen gewinkelten Blechhalter 74, sowie eine Heckklappenverkleidung 46, welche den Grundkörper 62 der Heckklappe 26 an einer dem Kofferraum 36 zugewandten Seite der Heckklappe 26 verkleidet. Dabei ist in der Heckklappenverkleidung 46 eine Ausnehmung 48 ausgebildet, in welcher das Warndreieck 42 vorzugsweise formschlüssig und kraftschlüssig aufgenommen ist. Das Halteelement 44 liegt im Bereich der Ausnehmung 48 derart an oder nimmt die Heckklappenverkleidung der Heckklappenverkleidung 46 an, dass das Halteelement 44 eine Versteifung 50 für die Heckklappenverkleidung 46 ausbildet.

Das Halteelement 44 ist in diesem Ausführungsbeispiel als ein Blechhalter 74 ausgeführt, welcher einen ersten Abschnitt 52 aufweist, welcher mit dem Grundkörper 62 der Heckklappe 26 vorzugsweise stoffschlüssig verbunden ist. Der erste Abschnitt 52 des Halteelements 44 ist dabei beispielsweise durch eine Schweißverbindung mit dem Grundkörper 62 der Heckklappe 26 verbunden. Alternativ kann das Halteelement 44 durch ein Stanz-Biegeverfahren aus dem Grundkörper 62 der Heckklappe 26 entformt werden. Dabei wird eine neuartige Haltegeometrie zur Aufnahme des Warndreiecks 42 geschaffen, welche durch die Heckklappenverkleidung 46 zumindest teilweise abgedeckt wird. Somit kann eine definierte Haltefunktion zentral designed und ausgestaltet werden, wobei die Haltefunktion primär durch das Halteelement 44 erzielt und durch die Rückflächen der Heckklappenverkleidung 46 unterstützt wird. Der erste Abschnitt 52 des Halteelements 44 verläuft dabei vorzugsweise horizontal, das heißt, parallel zu einem Ladeboden 54 des Kofferraums 36. Der zweite Abschnitt 56 des Halteelements 44 verläuft dabei vorzugsweise senkrecht zu dem ersten Abschnitt 52 und ist dazu eingerichtet, die Heckklappenverkleidung 46 zu versteifen. Insbesondere kann die Heckklappenverkleidung 46 formschlüssig in dem zweiten Abschnitt 56 des Halteelements 44 aufgenommen sein, wodurch das Halteelement 44 nicht nur als Versteifung 50, sondern gleichzeitig auch zur Fixierung der Heckklappenverkleidung 46 dient. Die Heckklappenverkleidung 46 weist in der Ausnehmung 48 einen Aufnahmebereich 68 auf, in welchem das Warndreieck 42 zumindest formschlüssig und gegebenenfalls auch noch zusätzlich kraftschlüssig aufgenommen ist. Oberhalb des Aufnahmebereichs 68 ist in der Heckklappenverkleidung 46 eine Öffnung 66 vorgesehen, durch welche das Warndreieck 42 in dem Aufnahmebereich 68 abgelegt beziehungsweise aus dem Aufnahmebereich 68 entnommen werden kann.

Zwischen einem dem Grundkörper 62 der Heckklappe 26 zugewandten Abschnitt 60 der Heckklappenverkleidung 46 und dem Grundkörper 62 ist ein Abstandhalter 64 vorgesehen, um die Heckklappenverkleidung 46 auf einem definierten Abstand von dem Grundkörper 62 zu halten und somit einen Hohlraum auszubilden, in welchem eine Mechanik und/oder Elektrik beziehungsweise Elektronik zur Betätigung der Heckklappe 26 beziehungsweise in der Heckklappe 26 vorgesehener Funktionskomponenten wie Schlösser oder Beleuchtungskomponenten angeordnet werden können. Zudem sorgt der Abstandshalter 64 für eine zusätzliche Stabilisierung des Aufnahmebereichs 68. Dadurch kann eine besonders sichere Befestigung und Aufnahme des Warndreiecks 42 sichergestellt werden. Bei einer entsprechenden Ausgestaltung der Heckklappe 26 kann der Abstandshalter 64 auch entfallen, wodurch die Heckklappenverkleidung 46 kompakter ausgeführt werden kann und zusätzliches Kofferraumvolumen geschaffen wird. Die Auslegung der Haltevorrichtung 40 erfolgt dabei durch die Position und/oder Lage des zu haltenden Objektes, insbesondere des Warndreiecks 42. Der Abstand wird dabei vorzugsweise möglichst klein gewählt, wobei der in Richtung des Kofferraums 36 davorliegende Bereich der Heckklappenverkleidung 46 die Aufnahmefunktion für das zu haltende Objekt übernimmt.

Das Halteelement 44 ist vorzugsweise so ausgestaltet, dass eine Oberkante 72 des zweiten Abschnitts 56 oberhalb einer Oberkante 72 eines in dem Aufnahmebereich 68 vollständig aufgenommenen Warndreiecks 42 liegt.

An der Heckklappenverkleidung 46 sind ferner an einer dem Kofferraum 36 zugewandten Seite 88 der Heckklappenverkleidung 46 eine Eingriffsmulde 86 und einer oberhalb der Eingriffsmulde 86 angeordnete Öffnung 66 zur Entnahme des Warndreiecks 42 aus der Ausnehmung 48 beziehungsweise dem Aufnahmebereich 68 ausgebildet. Dabei weist die Öffnung 66 eine Breite auf, welche größer als die Breite des Warndreiecks 42 ist. Die Eingriffsmulde 86 weist eine Breite auf, welche kleiner als die Breite des Warndreiecks 42 ist, um eine formschlüssige Aufnahme des Warndreiecks 42 in dem Aufnahmebereich 68 sicherzustellen. Vorzugsweise weist die Öffnung 66 eine Unterkante 70 auf, welche höher liegt, als die Oberkante 72 des in dem Aufnahmebereich 68 vollständig aufgenommenen Warndreiecks 42. Insbesondere kann die Unterkante 70 der Öffnung 66 durch die Oberkante 72 des zweiten Abschnitts 56 des Halteelements 44 definiert werden.

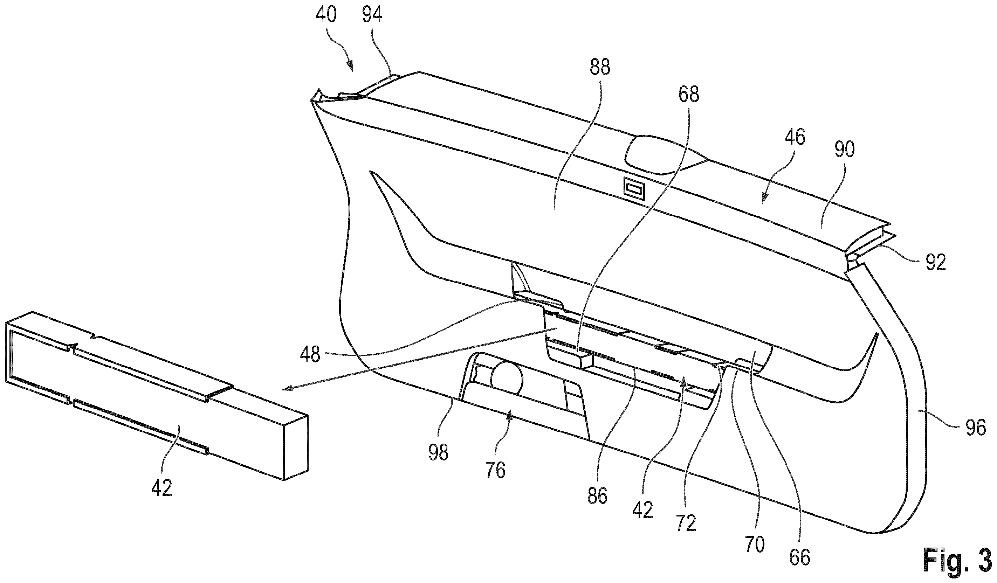

In Figur 3 ist eine Heckklappenverkleidung 46 an einer Heckklappe 26 einer erfindungsgemäßen Haltevorrichtung 40 in einer dem Kofferraum 36 des Kraftfahrzeugs 10 zugewandten Ansicht 88 mit einem in einer Ausnehmung 48 der Heckklappenverkleidung 46 aufgenommenen Warndreieck 42 dargestellt. Die Heckklappenverkleidung 46 weist eine Öffnung 66 auf, durch welche das Warndreieck 42 in den Aufnahmebereich 68 eingeführt beziehungsweise aus dem Aufnahmebereich 68 entnommen werden kann. Dabei ist bei einem vollständig in dem Aufnahmebereich 68 aufgenommenen Warndreieck 42 die Oberkante 72 des Warndreiecks 42 niedriger als die Unterkante 70 der Öffnung 66.

Unterhalb der Öffnung 66 ist eine Eingriffsmulde 86 vorgesehen, um das Warndreieck in der verstauten Position besser erreichen zu können. An den Seitenbereichen der Eingriffsmulde 86 ist jeweils ein Halteelement 44 vorgesehen, um die Heckklappenverkleidung 46 in diesem Bereich entsprechend zu versteifen.

Ferner ist an der Heckklappe 26, insbesondere an einer Unterkante 98 der Heckklappenverkleidung 46 ein Griff 76 vorgesehen, um das Öffnen beziehungsweise Schließen der Heckklappe 26 zu erleichtern. Der Griff 76 ist vorzugsweise über eine Schraubverbindung mit dem Grundkörper 62 der Heckklappe 26 verbunden. Alternativ zu einem mit der Heckklappe 26 oder der Heckklappenverkleidung 46 verbundenen Griff 76 kann auch eine Lasche oder ein Zugband zum Schließen der Heckklappe 26 vorgesehen werden. Ferner alternativ kann an der Heckklappe 26 oder im Kofferraum 36 ein Bedienelement vorgesehen sein, um einen elektrischen Öffnungs- oder Schließvorgang der Heckklappe 26 einzuleiten.

Die Heckklappenverkleidung 46 weist ferner einen Befestigungsabschnitt 90 auf, welcher an einer Oberkante der Heckklappenverkleidung 46 ausgebildet ist. An dem Befestigungsabschnitt 90 sind seitlich eine erste Aufnahme 92 und eine zweite Aufnahme 94 ausgebildet. Ferner weist die Heckklappenverkleidung 46 einen Randbereich 96 auf, welcher die Heckklappenverkleidung 46 seitlich abschließt.

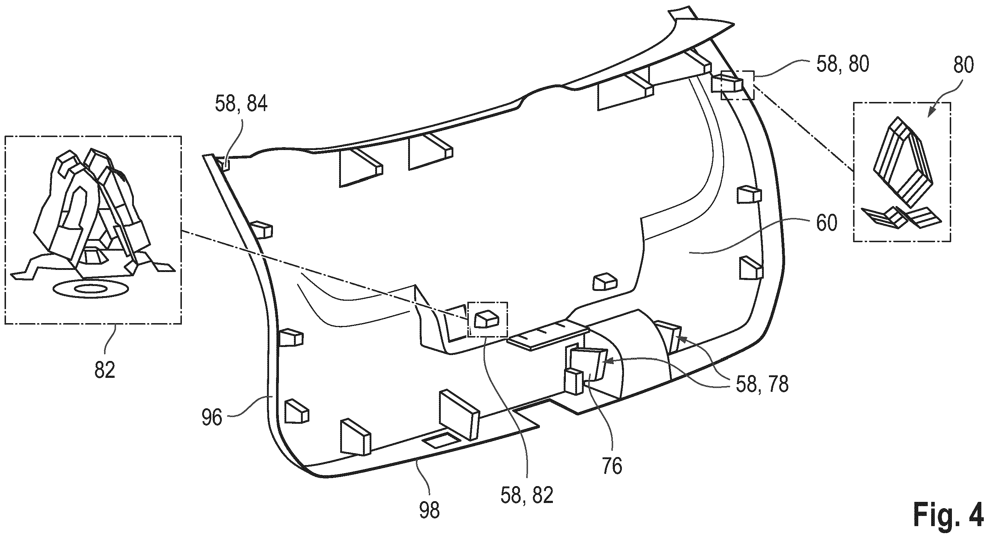

In Figur 4 ist die Heckklappenverkleidung 46 einer erfindungsgemäßen Haltevorrichtung 40 zur Aufnahme eines Warndreiecks 42 von der Seite dargestellt, welche nach der Montage der Heckklappenverkleidung 46 an dem Grundkörper 62 der Heckklappe 26 diesem Grundkörper 62 zugewandt ist. Die Heckklappenverkleidung 46 weist dabei eine Mehrzahl von Verbindungselementen 58 auf, über welche die Heckklappenverkleidung 46 mit dem Grundkörper 62 der Heckklappe 26 verbunden wird. Dabei sind zur Fixierung des Griffs 76 Schrauben 78 vorgesehen, um den Griff 76 an dem Grundkörper 62 der Heckklappe festzuschrauben. Ferner sind ein oder mehrere Verbindungsstifte 84 vorgesehen, mit welchen die Heckklappenverkleidung 46 an dem Grundkörper 62 der Heckklappe 26 fixiert werden kann. Alternativ oder zusätzlich kann die Fixierung der Heckklappenverkleidung 46 eine oder mehrere Klammern 80 umfassen. Die Klammern 80 können in gerader oder gebogener Form ausgebildet sein. In Figur 4 ist eine Klammer 80 dargestellt, welche die Form des griechischen Buschstabens Omega Ω aufweist, wobei durch die Formgebung eine entsprechende Elastizität erreicht wird, welche die Fixierung der Heckklappenverkleidung 46 an dem Grundkörper 62 der Heckklappe 26 erleichtert. Darüber hinaus können die Verbindungselemente 58 in Form von Federmuttern 82 ausgebildet sein, welche eine Befestigung der Heckklappenverkleidung 46 an dem Grundkörper 46 erleichtern.

Alternativ oder zusätzlich kann die Heckklappenverkleidung 46 auch über weitere Fixierungselemente wie Halteclips oder Rastnasen mit dem Grundkörper 62 der Heckklappe 26 verbunden werden. Ferner können an der dem Grundkörper 62 der Heckklappe 26 zugewandten Seite 60 der Heckklappenverkleidung 46 Versteifungselemente ausgebildet sein, um die Biegesteifigkeit und/oder Torsionssteifigkeit der Heckklappenverkleidung 46 zu erhöhen. Zudem können auch im Bereich der Unterkante 98 der Heckklappenverkleidung 46 Versteifungsrippen ausgebildet sein. Dabei sind die Versteifungsrippen vorzugsweise an der der dem Grundkörper 62 der Heckklappe 26 zugewandten Seite der Heckklappenverkleidung 46 ausgebildet, um den optischen Eindruck der Heckklappenverkleidung 46 nicht zu stören.

### Bezugszeichenliste

- 10: Kraftfahrzeug
- 12: Karosserie
- 14: Motorhaube
- 16: vordere Tür
- 18: hintere Tür

- 20: Dach
- 22: vorderer Stoßfänger
- 24: hinterer Stoßfänger
- 26: Heckklappe
- 28: Seitenspiegel

- 30: Vorderachse
- 32: Hinterachse
- 34: Fahrzeuginnenraum
- 36: Kofferraum
- 38: C-Säule

- 40: Haltevorrichtung
- 42: Warndreieck
- 44: Halteelement
- 46: Heckklappenverkleidung
- 48: Ausnehmung

- 50: Versteifung
- 52: erster Abschnitt
- 54: Ladeboden
- 56: zweiter Abschnitt
- 58: Verbindungselement
- 60: Abschnitt der Heckklappenverkleidung
- 62: Grundkörper der Heckklappe
- 64: Abstandshalter
- 66: Öffnung
- 68: Aufnahmebereich

- 70: Unterkante
- 72: Oberkante
- 74: Blechhalter
- 76: Griff
- 78: Schraube

- 80: Klammer
- 82: Federmutter
- 84: Verbindungsstift
- 86: Eingriffsmulde
- 88: Seite der Heckklappenverkleidung

- 90: Befestigungsabschnitt
- 92: erste Aufnahme
- 94: zweite Aufnahme
- 96: Randbereich
- 98: Unterkante

## Patentansprüche

1. Haltevorrichtung (40) für ein Warndreieck (42) in einem Kofferraum (36) eines Kraftfahrzeugs (10), umfassend
- eine Heckklappe (26),
- ein mit der Heckklappe (26) verbundenes Halteelement (44),
- eine Heckklappenverkleidung (46), welche einen Grundkörper (62) der Heckklappe (26) an der dem Kofferraum (36) zugewandten Seite verkleidet, und
- eine in der Heckklappenverkleidung (46) ausgebildete Ausnehmung (48), in welcher das Warndreieck (42) aufgenommen wird,
- wobei das Halteelement (44) im Bereich der Ausnehmung (48) der Heckklappenverkleidung (46) derart an der Heckklappenverkleidung (46) anliegt oder die Heckklappenverkleidung (46) aufnimmt, dass das Halteelement (44) eine Versteifung (50) für die Heckklappenverkleidung (46) ausbildet.

2. Haltevorrichtung (40) nach Anspruch 1, wobei das Halteelement (44) einen mit der Heckklappe (26) verbundenen ersten Abschnitt (52) aufweist, welcher im Wesentlichen parallel zu einem Ladeboden (54) des Kofferraums (36) verläuft und einen sich an den ersten Abschnitt (52) anschließenden zweiten Abschnitt (56) aufweist, welcher im Wesentlichen senkrecht zu dem ersten Abschnitt (52) des Halteelements (44) verläuft.

3. Haltevorrichtung (40) nach einem der Ansprüche 1 oder 2, wobei die Heckklappenverkleidung (46) über das Halteelement (44) mit der Heckklappe (26) verbunden ist.

4. Haltevorrichtung (40) nach einem der Ansprüche 1 bis 3, wobei das Halteelement (44) stoffschlüssig mit der Heckklappe (26) verbunden ist.

5. Haltevorrichtung (40) nach einem der Ansprüche 1 bis 4, wobei das Halteelement (44) über ein Verbindungselement (58) über eine reversible lösbare Verbindung mit der Heckklappe (26) verbunden ist.

6. Haltevorrichtung (40) nach einem der Ansprüche 1 bis 5, wobei an der Ausnehmung (48) zwischen einem der Heckklappe (26) zugewandten Abschnitt (60) der Heckklappenverkleidung (46) und dem Grundkörper (62) der Heckklappe (26) ein Abstandshalter (64) angeordnet ist.

7. Haltevorrichtung (40) nach einem der Ansprüche 1 bis 6, wobei das Warndreieck (42) kraftschlüssig und/oder formschlüssig in der Ausnehmung (48) aufgenommen ist.

8. Haltevorrichtung (40) nach einem der Ansprüche 1 bis 7, wobei die Ausnehmung (48) eine Öffnung (66) zur Entnahme des Warndreiecks (42) aus der Haltevorrichtung (40) aufweist, welche oberhalb eines Aufnahmebereichs (68) der Halterung (40) liegt.

9. Haltevorrichtung (40) nach Anspruch 8, wobei eine Unterkante (70) der Öffnung (66) oberhalb einer Oberkante (72) eines in der Ausnehmung (48) aufgenommenen Warndreiecks (42) liegt.

10. Kraftfahrzeug (10) mit einer Haltevorrichtung (40) nach einem der Ansprüche 1 bis 9, wobei die Haltevorrichtung (40) in einem Kofferraum (36) des Kraftfahrzeuges (10) angeordnet ist.
